# EUROPÄISCHE PATENTSCHRIFT

(11) **EP 3 450 094 B1**
(45) Veröffentlichungstag und Bekanntmachung des Hinweises auf die Patenterteilung: **04.09.2019**
(21) Anmeldenummer: 18191636.2
(22) Anmeldetag: 30.08.2018
(51) Int. Cl.: B23Q 11/08, F16C 29/00, F16C 29/02, F16P 3/02

(54) **MASCHINE, INSBESONDERE WERKZEUGMASCHINE, MIT WENIGSTENS EINER SCHUTZABDECKUNG**
MACHINE, IN PARTICULAR MACHINE TOOL, WITH AT LEAST ONE PROTECTIVE COVER
MACHINE, EN PARTICULIER MACHINE-OUTIL, DOTÉE D'AU MOINS UN COUVERCLE DE PROTECTION

(30) Priorität: 01.09.2017 DE 202017105288 U
(43) Veröffentlichungstag der Anmeldung: 06.03.2019
(73) Patentinhaber: Möller Werke GmbH, 33649 Bielefeld (DE)
(72) Erfinder: Dietrich, Stefan, 33154 Salzkotten (DE); Vogt, Karsten, 33649 Bielefeld (DE)
(74) Vertreter: Schober, Mirko

(56) Entgegenhaltungen:
- DE-A1- 3 423 390
- DE-B3-102012 214 972
- DE-U1- 9 310 752
- DE-U1-202015 005 543
- DE-U1-202015 105 200
- JP-A- 2006 080 260

## Beschreibung

Die Erfindung betrifft eine Maschine, insbesondere eine Werkzeugmaschine mit wenigstens einer Schutzabdeckung.

Gattungsgemäße Maschinen, bei denen es sich in der Regel um Bearbeitungszentren handelt, weisen Schutzabdeckungen auf, die dazu dienen, den Raum außerhalb des Maschinen-Arbeitsraums vor Beeinträchtigungen (zum Beispiel Späne) zu schützen, die auftreten können, wenn ein zu bearbeitender Gegenstand innerhalb des Arbeitsraums der Maschine bearbeitet wird.

Derartige Schutzabdeckungen sind längenveränderlich, so dass sie in der Regel aus einem Faltenbalg oder jedenfalls aus miteinander gekoppelten Schutzlamellen gebildet sind und sich ausziehen bzw. einfahren lassen.

Folglich bilden die Schutzabdeckungen einen verschieblichen Teil der Maschine, so dass sie beim Ausziehen bzw. Einfahren an der Maschine geführt werden müssen. Dies geschieht in der Regel mittels an der Maschine angebrachter Führungen. Diese Führungen sind abhängig von der Länge der Maschine oftmals nicht durchgängig ausgebildet, sondern aus mehreren Führungsschienenabschnitten zusammengesetzt. Folglich ergibt sich hier das Problem, dass die an der Führung geführten Elemente - dies können beispielsweise an der Schutzabdeckung befestigte Gleiter oder auch die oben angesprochenen Lamellen selbst sein - beim Ausziehen bzw. Einfahren die Stoßstellen benachbarter Führungsschienenabschnitte überfahren müssen. Dabei kann es vorkommen, dass die Stoßstellen, also der Übergang zwischen zwei Führungsschienenabschnitten im Hinblick auf die Führungsflächen, auf denen die geführten Elemente entlang gleiten, nicht bündig zueinander liegen. So können die geführten Elemente an den Stoßstellen hängen bleiben, was zu einer Beeinträchtigung des Verhaltens beim Ausfahren bzw. Einziehen führt. Das endet häufig damit, dass die Schutzabdeckungen unter Umständen schneller verschlissen oder gar beschädigt werden.

DE 10 2012 214 972 B3 offenbart den Oberbegriff des Anspruchs 1.

Aufgabe der vorliegenden Erfindung ist es daher, eine Maschine mit einer Schutzabdeckung anzugeben, bei welcher diese geschilderten Schwierigkeiten möglichst weitgehend vermieden werden.

Gelöst wird diese Aufgabe durch eine Maschine mit den Merkmalen des Anspruchs 1. Vorteilhafte Ausführungsformen finden sich in den Unteransprüchen.

Der Grundgedanke der Erfindung sieht vor, dass im Bereich der Stoßstelle wenigstens ein Gleitstück vorhanden ist, welches mit einem Mittelabschnitt aus der Führungsfläche der Führung herausragt. Wird dieses Gleitstück beim Aufziehen bzw. Einfahren der Schutzabdeckung überfahren, so wird das geführte Element - bei dem es sich wie eingangs erwähnt um einen Gleiter oder auch eine Lamelle handeln kann - in der Bewegung über die Stoßstelle hinweg gehoben. Es kann also nicht mehr vorkommen, dass das geführte Element etwa an der Stoßstelle hängenbleibt.

Dazu weist das wenigstens eine Gleitstück einen aus der Führungsfläche vorstehenden Mittelabschnitt auf. Bezogen auf die Verlaufsrichtung der Führung weist das wenigstens eine Gleitstück zu beiden Seiten des Mittelabschnitts diesem gegenüber zum jeweiligen Ende der Führung hin abfallende Seitenabschnitte auf. So fährt also das geführte Element in jeder Bewegungsrichtung der Schutzabdeckung über eine Rampe und wird über die Stoßstelle gehoben.

Nach einer bevorzugten Ausführungsform ist ein erstes Gleitstück vorgesehen, welches die Stoßstelle überspannt. Somit kann sichergestellt werden, dass das geführte Element nicht an der Stoßstelle mit der eigentlichen Führungsfläche in Kontakt kommt.

Es ist nicht unbedingt nötig, dass das Gleitstück über seine gesamte Längserstreckung entlang der Führungsrichtung aus der Führungsfläche herausragt. Es genügt, wenn ein erstes Gleitstück zumindest unmittelbar an der Stoßstelle aus der Führungsfläche vorspringt.

Weiter kann ein weiteres Gleitstück vorgesehen sein, dessen Mittelabschnitt im Bereich des Endes des Seitenabschnitts des ersten Gleitstücks angeordnet ist. Dieses Gleitstück hat die Aufgabe, die geführten Elemente über die Stoßkante zu heben, die sich am Ende des Seitenabschnitts des ersten Gleitstücks ergibt. Diese Ausführungsform ist besonders vorteilhaft, wenn die Gleitstücke keine eingesetzten Zusatzelemente sind, sondern aus dem Material der Führung geformt werden.

Bevorzugt ist dabei vorgesehen, dass das weitere Gleitstück gänzlich auf einer Seite der Stoßstelle angeordnet ist.

Die Oberfläche des Gleitstücks kann auf unterschiedliche Art und Weise ausgebildet sein. Bevorzugt ist vorgesehen, dass wenigstens ein Gleitstück eine Dachform und/oder eine Wölbung aufweist.

Die Erfindung wird nachfolgend anhand der in den Figuren 1 - 6 gezeigten Ausführungsbeispiele näher erläutert.
- Figur 1 -: zeigt eine perspektivische Ansicht auf eine erfindungsgemäße Führungsschiene, die aus wenigstens zwei Führungsschienenabschnitten zusammengesetzt ist,
- Figur 2 -: zeigt eine Draufsicht auf die Führungsfläche der in Figur 1 gezeigten Führungsschiene,
- Figur 3 -: zeigt eine Seitenansicht auf die Schmalseite der in Figur 1 gezeigten Führungsschiene,
- Figur 4 -: zeigt eine perspektivische Ansicht einer weiteren Ausführungsform einer erfindungsgemäßen Führungsschiene.
- Figur 5 -: zeigt eine Querschnittansicht durch in Figur 4 gezeigte Führungsschiene,
- Figur 6 -: zeigt eine Draufsicht auf die Führungsfläche der in Figur 4 gezeigten Führungsschiene.

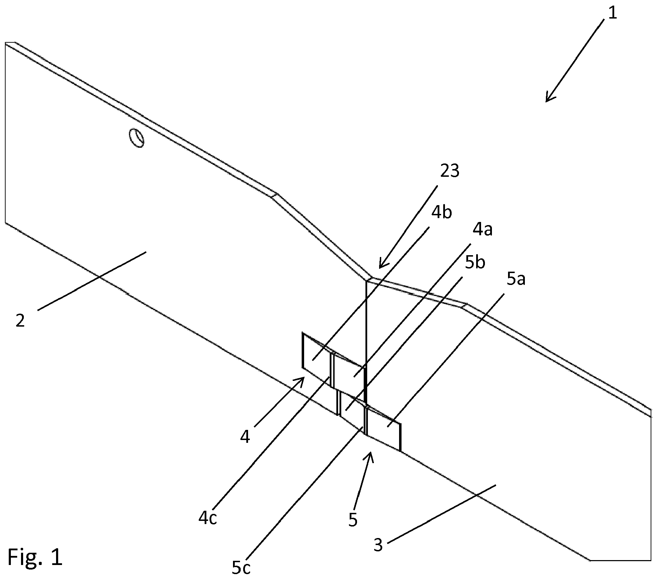

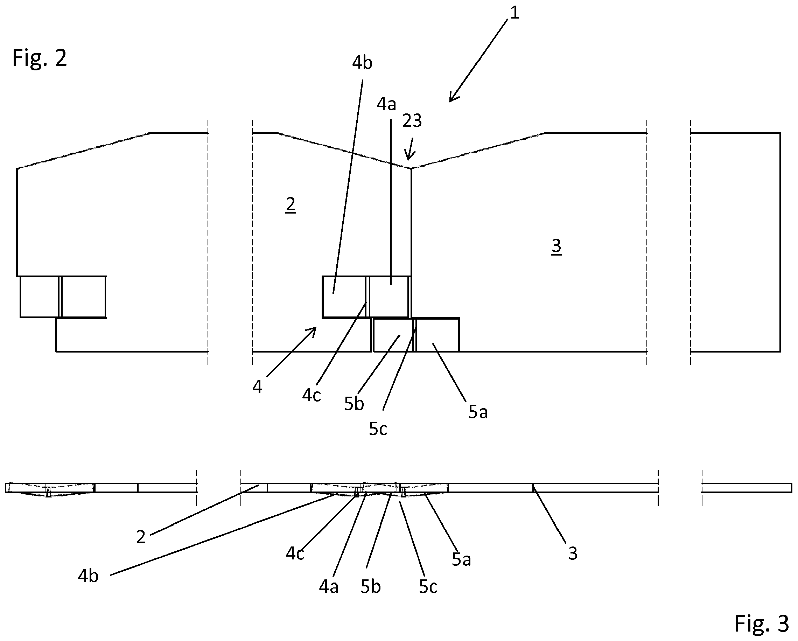

Im in den Figuren 1 - 3 gezeigten ersten Ausführungsbeispiel weist die erfindungsgemäße Maschine, von der in den Zeichnungen lediglich die Führungsschiene 1 für die Schutzabdeckung (ebenfalls nicht abgebildet) gezeigt ist, wenigstens zwei Führungsschienenabschnitte 2 und 3 auf, die benachbart zu-einander unter Ausbildung einer Stoßstelle 23 angeordnet sind. In die Führungsschienenabschnitte 2 und 3 ist ein Gleitstück 4 bzw. 5 eingelassen. Jedes der Gleitstück 4, 5 weist einen Mittelabschnitt 4c bzw. 5c auf, welcher gegenüber den in Längserstreckungsrichtung der Führung vorauslaufenden und nachlaufenden Abschnitten der Gleitstücke 4, 5 vorspringt. Im gezeigten Beispiel sind die Gleitstücke 4, 5 etwa dachförmig ausgebildet, wobei die vorspringenden Abschnitte 5c bzw. 4c zu beiden Seiten in Führungsrichtung abfallende Schrägabschnitte 5a bzw. 5b respektive 4a bzw. 4b aufweisen. Zumindest die Mittelabschnitte 5c bzw. 4c ragen aus der Oberfläche der Führungsabschnitte 2 bzw. 3 heraus. Diese Bereiche liegen bevorzugt im Bereich bzw. unmittelbar an der Stoßstelle 23 bzw. der Kante 25. Wird also ein zu führendes Element, welches beispielsweise als Gleiter oder Schutzlamelle Teil der Schutzabdeckung der Maschine ist, in Längserstreckungsrichtung der Führung 2, 3 auf der Führung entlang bewegt bzw. gleitet es über diese hinweg, so wird das zu führende Element im Bereich der Stoßstelle durch Auffahren auf die seitlichen Abschnitte 4a bzw. 4b respektive 5a bzw. 5b zum Mittelabschnitt 4c bzw. 5c angehoben und über die Stoßstelle 23 bzw. die Kante 25 hinweg gehoben. Auf diese Weise bleibt ein zu führendes Element, sei es nun eine Lamelle oder ein Gleiter, nicht im Bereich der Stoßstelle oder Kante hängen, selbst wenn diese durch unpräzise Zusammenführung der Führungsabschnitte 2, 3 an der Stoßstelle eine Stufe bilden. Grundsätzlich kann das Gleitstück 4 bzw. 5 auf der Oberfläche der Führungsfläche angebracht oder in diese eingesetzt sein. Nach einer weiteren bevorzugten Ausführungsform ist es möglich, in dem Bereich, in dem die Gleitstücke 4, 5 unterzubringen sind, diese aus der Führungsfläche der Führungsabschnitte 4 bzw. 5 auszuschneiden und durch Biegen in die benötigte Form zu bringen. Dies ist auch im Ausführungsbeispiel der Figuren 1 - 3 gezeigt.

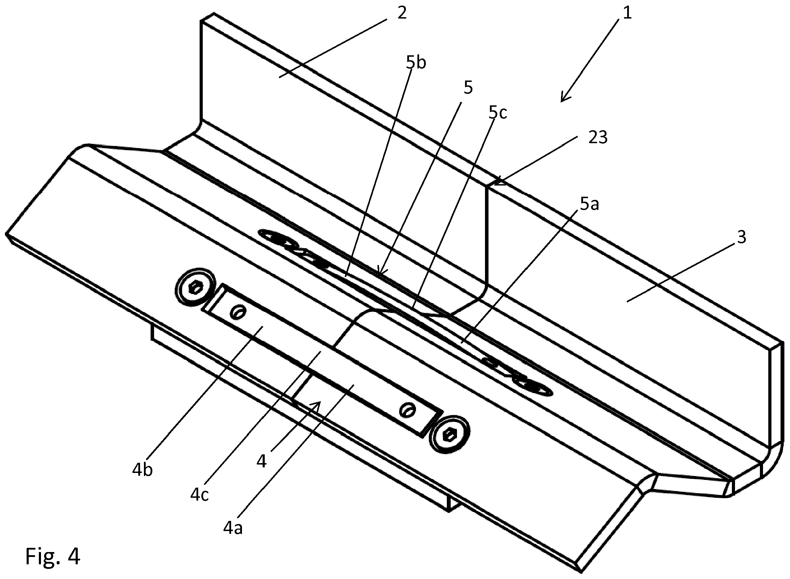

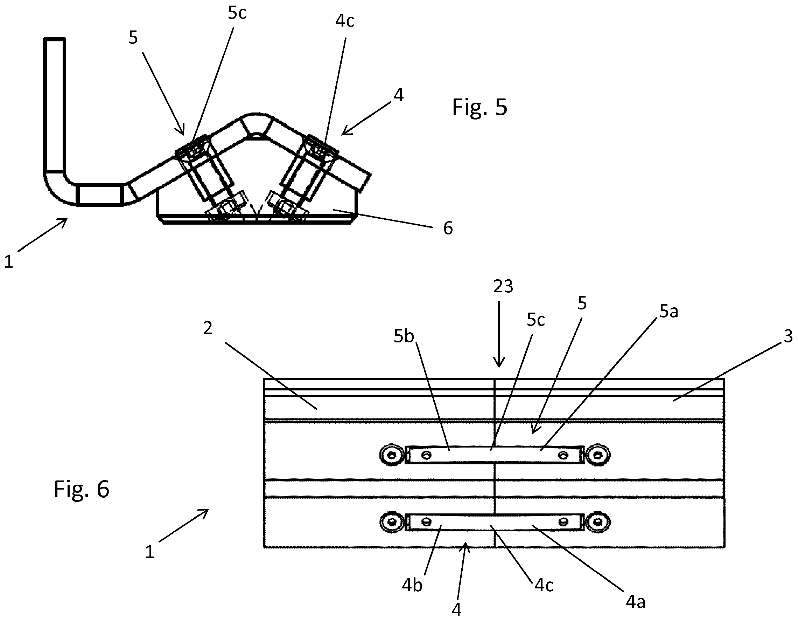

Im Ausführungsbeispiel, welches in den Figuren 4 - 6 illustriert ist, wird die Führung ebenfalls durch zwei Führungsabschnitte 2, 3 gebildet, die, wie im obigen Ausführungsbeispiel auch, an einer Stoßstelle 23 zusammengeführt sind. Es handelt sich hier nicht um ebene Führungsabschnitte, sondern gewinkelte. Entsprechend weist jeder Führungsabschnitt 2, 3 zueinander gewinkelte Führungsflächen auf, in denen jeweils ein die Stoßstelle überbrückendes Gleitstück 4, 5 vorgesehen ist. Im gezeigten Beispiel sind diese Gleitstück 4, 5 nicht dachförmig gewinkelt, sondern nach oben gewölbt. Gleichwohl liegt auch hier wieder der jeweilige Mittelabschnitt 4c, 5c oberhalb der Führungsfläche der jeweiligen Führungsabschnitte 2, 3. Wie man insbesondere in der Figur 5 erkennt, sind die Gleitstücke 4, 5 an einem Block 6 befestigt, welcher unterhalb der Führungsschiene 1 befestigt ist und u.a. zur Verbindung der Abschnitte 2, 3 der Führungsschiene dient. Die Wölbung der Gleitstücke 4, 5 ist so ausgebildet, dass zumindest der Scheitelpunkt der Wölbung im Bereich der Stoßstelle 23 oberhalb der Oberfläche der Führungsschiene 1 liegt. Ebenso wie im vorangegangenen Ausführungsbeispiel ist es auch hier möglich, die die Führungsfläche überfahrenden geführten Elemente im Bereich der Stoßstelle 23 so anzuheben, dass sie an der Stoßstelle nicht hängen bleiben.

## Patentansprüche

1. Maschine, insbesondere Werkzeugmaschine, mit wenigstens einer Schutzabdeckung und zwei benachbart zueinander angeordneten, eine Stoßstelle (23) ausbildenden Führungsschienenabschnitten (2, 3), die eine Führung bilden, an der die Schutzabdeckung verschieblich geführt ist, wobei die Schutzabdeckung geführte Elemente aufweist, die über eine Führungsfläche der Führung gleiten, wobei an der Stoßstelle (23) wenigstens ein Gleitstück (4, 5) angeordnet ist, wobei die Maschine **dadurch gekennzeichnet ist, dass** das wenigstens eine Gleitstück (4, 5) einen aus der Führungsfläche vorstehenden Mittelabschnitt (4c, 5c) aufweist und bezogen auf Verlaufsrichtung der Führung zu beiden Seiten des Mittelabschnitts (4c, 5c) diesem gegenüber zum jeweiligen Ende der Führung hin abfallende Seitenabschnitte (4a, 4b; 5a, 5b) aufweist.

2. Maschine nach Anspruch 1,
**dadurch gekennzeichnet,**
**dass** ein erstes Gleitstück (5) die Stoßstelle (23) überspannt.

3. Maschine nach einem der vorigen Ansprüche,
**dadurch gekennzeichnet,**
**dass** das erste Gleitstück (5) zumindest unmittelbar an der Stoßstelle (23) aus der Führungsfläche vorspringt.

4. Maschine nach einem der vorigen Ansprüche,
**dadurch gekennzeichnet,**
**dass** ein weiteres Gleitstück (4) vorgesehen ist, dessen Mittelabschnitt (4c) im Bereich des Endes des Seitenabschnitts (5b) angeordnet ist.

5. Maschine nach Anspruch 4,
**dadurch gekennzeichnet,**
**dass** das weitere Gleitstück (4) gänzlich auf einer Seite der Stoßstelle (23) angeordnet ist.

6. Maschine nach einem der vorigen Ansprüche,
**dadurch gekennzeichnet,**
**dass** wenigstens ein Gleitstück (4, 5) eine Dachform und/ oder eine Wölbung aufweist.

7. Maschine nach einem der vorigen Ansprüche,
**dadurch gekennzeichnet,**
**dass** es sich bei den geführten Elementen um Gleitelemente und/oder die Außenseite der Schutzabdeckung bildende Lamellen, insbesondere Stahllamellen, handelt.

## Claims

1. Machine, in particular machine tool, with at least one protective cover and two guide rail sections (2, 3) which are arranged adjacent one another to form a butt joint (23) and a guide on which the protective cover is movably guided, wherein the protective cover has guided elements which slide over a guiding surface of the guide, wherein at least one slide member (4, 5) is arranged at the butt joint (23), wherein the machine is
**characterised in that**
the at least one slide member (4, 5) has a centre section (4c, 5c) which protrudes from the guiding surface and has side sections (4a, 4b; 5a, 5b) which,
in relation to the running direction of the guide, drop down on both sides of the centre section (4c, 5c) towards the respective ends of the guide opposite the centre section.

2. Machine according to claim 1
**characterised in that**
a first slide member (5) spans the butt joint (23).

3. Machine according to one of the preceding claims
**characterised in that**
the first slide member (5) projects out from the guiding surface at least directly at the butt joint (23) .

4. Machine according to one of the preceding claims
**characterised in that**
a further slide member (4) is provided whose centre section (4c) is arranged in the region of the end of the side section (5b).

5. Machine according to claim 4
**characterised in that**
the further slide member (4) is arranged entirely on one side of the butt joint (23).

6. Machine according to one of the preceding claims
**characterised in that**
at least one slide member (4, 5) has a roof-shape and/or a curvature.

7. Machine according to one of the preceding claims
**characterised in that**
the guided elements are slide elements and/or lamella slats, in particular steel slats, forming the outside of the protective cover.

## Revendications

1. Machine, en particulier machine-outil, dotée d'au moins un couvercle de protection et de deux sections de rail de guidage (2, 3), qui, disposées l'une à proximité de l'autre, forment un point de jointoiement (23), réalisant un dispositif de guidage, sur lequel le couvercle de protection peut être déplacé par coulissement, sachant que le couvercle de protection présente des éléments coulissants, qui glissent sur une surface de guidage du dispositif de guidage, sachant que, sur l'emplacement de jointoiement (23), est disposé au moins une pièce de glissement (4, 5), sachant que la machine est
**caractérisée en ce que**
l'au moins une pièce de glissement (4, 5) présente une section centrale (4c, 5c) qui fait saillie hors de la surface de guidage, et, par rapport à la direction de déroulement du guidage, présente, des deux côtés de la section centrale (4c, 5c), à l'opposé de celle-ci, des sections latérales descendantes (4a, 4b; 5a, 5b) chacune vers l'extrémité respective du dispositif de guidage.

2. Machine selon la revendication 1,
**caractérisée en ce que**
la première pièce de glissement (5) s'étend au-dessus de l'emplacement de jointoiement (23) qu'elle recouvre.

3. Machine selon l'une des revendications précédentes,
**caractérisée en ce que**
la première pièce de glissement (5) fait saillie hors de la surface de glissement, au moins directement à l'emplacement de jointoiement (23).

4. Machine selon l'une des revendications précédentes,
**caractérisée en ce que**
l'on prévoit une autre pièce de glissement (4), dont la section centrale (4c) est disposée dans la zone de l'extrémité de la section latérale (5b).

5. Machine selon la revendication 4,
**caractérisée en ce que**
l'autre pièce de glissement (4) est disposée entièrement sur un côté de l'emplacement de jointoiement (23).

6. Machine selon l'une des revendications précédentes,
**caractérisée en ce que**
au moins une pièce de glissement (4, 5) présente la forme d'un toit et / ou un bombement.

7. Machine selon l'une des revendications précédentes,
**caractérisée en ce que**
quant aux éléments guidés, il s'agit là d'éléments de glissement et / ou de lamelles, en particulier de lamelles en acier, qui forment la face extérieure du couvercle de protection.
